# EUROPEAN PATENT SPECIFICATION

(11) **EP 4 334 821 B1**
(45) Date of publication and mention of the grant of the patent: **21.05.2025**
(21) Application number: 21724667.7
(22) Date of filing: 07.05.2021
(51) Int. Cl.: G06F 16/22, G06F 16/901

(54) **HIERARCHICAL ACCUMULATOR STRUCTURE**
HIERARCHISCHE AKKUMULATOREN-STRUKTUR
STRUCTURE HIÉRARCHIQUE D'ACCUMULATEURS

(43) Date of publication of application: 13.03.2024
(73) Proprietor: Dfinity Stiftung, 8002 Zürich (CH)
(72) Inventor: BREITNER, Joachim, 8002 Zürich (CH); CAMENISCH, Jan, 8002 Zürich (CH); CERULLI, Andrea, 8002 Zürich (CH); DERLER, David, 8002 Zürich (CH); KASHITSYN, Roman, 8002 Zürich (CH); NEVEN, Gregory, 8002 Zürich (CH); WARINSCHI, Bogdan, 8002 Zürich (CH)
(74) Representative: E. Blum & Co. AG
(86) International application number: PCT/EP2021/062205
(87) International publication number: WO 2022/233436

(56) References cited:
- WO-A1-2010/024931
- MICHAEL T GOODRICH ET AL: "An Efficient Dynamic and Distributed RSA Accumulator", ARXIV.ORG, CORNELL UNIVERSITY LIBRARY, 201 OLIN LIBRARY CORNELL UNIVERSITY ITHACA, NY 14853, 8 May 2009 (2009-05-08), XP080323412

## Description

### Technical Field

The present invention pertains to a computer-implemented method for storing data in accumulators or accumulator structures.

Further aspects relate to a computing system and a computer program product.

### Background Art

Computing systems, in particular distributed computing systems such as in distributed networks, provide computing services, in particular distributed computing services. In such computing systems it is often a challenge to provide efficient mechanisms for providing access to computational results of the computing system/the computing services, and in particular to provide such access in an authenticable manner.

In this respect accumulators are known as a means to store data in a way that allows to access it in an authenticable manner. In general, accumulators are entities, units, logics or algorithms which combine a set of accumulator elements into a digest. One prominent and widely used example of an accumulator are hash trees.

Accumulators may be used in particular to certify the membership of an accumulator value in the accumulator. This can be done by computing a witness for a corresponding accumulator value.

WO 2010/024931 A1 discloses an apparatus including a memory storing data and a processor performing operations. The apparatus generates or maintains an accumulation tree for the stored data, in particular an ordered tree structure with a root node, leaf nodes and internal nodes. Each leaf node corresponds to a portion of the data. A depth of the tree remains constant. A bound on a degree of each internal node is a function of a number of leaf nodes of a subtree rooted at the internal node. Each node of the tree has an accumulation value. Accumulation values of the root and internal nodes are determined by hierarchically employing an accumulator over the accumulation values of the nodes lying one level below the node in question. The accumulation value of the root node is a digest for the tree.

The document by Michael T. Goodrich Et AL, "An Efficient Dynamic and Distributed RSA Accumulator", ArXiv.org, 20090508 Cornell University Library, 201 Olin Library Cornell University Ithaca, NY 14853, 8 May 2009, discloses how to use the RSA one-way accumulator to realize an efficient and dynamic authenticated dictionary, where untrusted directories provide cryptographically verifiable answers to membership queries on a set maintained by a trusted source.

### Disclosure of the Invention

Accordingly, one object of an aspect of the invention is to provide an advantageous method for storing data, in particular heterogeneous data, in a way that allows an efficient access to the data, in particular in a way that facilitates an efficient authentication and/or signing of the data.

According to an embodiment of an aspect of the invention there is provided a computer-implemented method for storing data, in particular heterogeneous data. The method comprises storing the data in a hierarchical accumulator structure. The hierarchical accumulator structure comprises at least a first level and a second level. The first level comprises a first level accumulator and the second level comprises a plurality of second level accumulators. The first level accumulator encompasses a plurality of first level elements and a first level digest of the plurality of first level elements. Each of the plurality of second level accumulators encompasses a plurality of second level elements and a second level digest of the plurality of second level elements and each of the second level digests of the plurality of second level accumulators corresponds to one of the plurality of first level elements. At least a subset of the plurality of first level elements comprises or is associated with metadata. The metadata comprises accumulator information for the corresponding second level accumulator. The step of storing the data comprises computing the plurality of second level accumulators in dependence on the respective accumulator information of the metadata of the first level elements.

Such a hierarchical accumulator structure allows a flexible and efficient storage of the data. This is in particular useful for heterogeneous data, i.e. data which have different characteristics and/or access patterns. The accumulator information of the metadata may be used to specify any desired or useful property for the computation of the corresponding second level accumulator. The accumulator information of the metadata is then taken into account for the computation of the corresponding accumulator. This allows to adapt each computation of the accumulators to the specifics of the data that is stored in the respective accumulator. As a result, each of the plurality of second level accumulators may be individually adapted and computed in dependence on the metadata.

The digest of each of the second level accumulators has a corresponding first level element. Accordingly, the respective first level elements correspond and hence form an interface between the first level accumulator and the respective second level accumulator. This structure allows in particular that each of the second level accumulators can be changed and updated independently from the other second level accumulators.

According to an embodiment, storing the data comprises computing different accumulator types of the second level accumulators in dependence on the respective accumulator information of the metadata of the first level elements.

Hence according to embodiments, the hierarchical accumulator structure may comprise a heterogeneous set of different types of second level accumulators. Each accumulator type may be chosen and computed in dependence on the metadata/the accumulator information of the metadata and may hence be optimized for the respective characteristics of the data that is stored in the respective second level accumulator.

According to embodiments, the hierarchical accumulator structure may further comprise a third level comprising a plurality of third level accumulators. Each of the plurality of third level accumulators may encompass a plurality of third level elements and a third level digest of the plurality of third level elements. Each of the third level digests of the plurality of third level accumulators corresponds to one of the plurality of second level elements. Furthermore, at least a subset of the plurality of second level elements comprises metadata and the metadata comprises accumulator information for the corresponding third level accumulator.

Providing additional levels increases the flexibility of the accumulator structure and allows to increase the overall number of individual accumulators which are stored in the accumulator structure. According to embodiments a fourth, fifth, and further levels may be added to the accumulator structure.

According to embodiments, the accumulator information of the metadata comprises information of the data type of the corresponding second level and/or third level accumulators.

According to such an embodiment, the method may take into account the data type to compute the corresponding second or third level accumulator. The data type may specify e.g. that the data of the corresponding accumulator stores data in a queue structure or that the data is a mapping, e.g. a key mapping.

According to another embodiment, the accumulator information defines an accumulator type for the corresponding second level and/or third level accumulators.

According to such an embodiment, it is specified in advance which kind of accumulator type shall be computed for the respective accumulator. Possible accumulator types include e.g. that the accumulator shall be computed as a hash tree which represents the data as a balanced tree, a red-black tree, a Patricia trie or a hash chain. Each of such trees may be suitable and chosen for a particular type of data. As an example, a Patricia trie may be in particular suitable for the storage of mappings, e.g. key mappings. On the other hand, a hash chain may be in particular suitable for the storage of queues.

According to another embodiment, the accumulator information comprises information of write and/or read access patterns of the corresponding accumulator.

This information can then be used to compute the corresponding accumulator in such a way that future write and/or read accesses are improved. As an example, accumulator elements which are accessed very often may be stored e.g. close to the digest of the accumulator.

According to embodiments, the method comprises selecting the respective accumulator type such that one or more predefined operations on the data of the corresponding accumulator can be performed in an optimized way.

Such operations may include e.g. write accesses such as inserts, updates, and deletes of data as well as read accesses.

According to an embodiment, the method comprises computing the first level accumulator and/or one or more of the plurality of second level accumulators and/or one or more of the plurality of third level accumulators as cryptographic accumulators, in particular as hash trees.

This facilitates in particular an efficient authentication and /or signing of the accumulator elements.

According to embodiments, storing the data comprises regularly analysing write accesses and/or read accesses to the hierarchical accumulator structure. The method may further comprise adapting the metadata of the plurality of first level elements and/or one or more of the plurality of second level elements and/or one or more of the plurality of third level elements in dependence on the analysis of the write accesses and/or the read accesses

Such an embodiment allows to adapt the computation of the respective accumulator dynamically to changing access patterns of the data. This may then in return dynamically improve an efficient authentication and/or signing of the corresponding accumulator elements.

According to another embodiment, the method comprises regularly computing a sequence of payloads, regularly storing computational results of the sequence of payloads in the hierarchical accumulator structure and regularly analysing the computational results. According to such an embodiment the method may include regularly adapting the metadata of the plurality of first level elements and/or the plurality of second level elements and/or the plurality of third level elements in dependence on the analysis of the computational results.

Hence according to such an embodiment the computational results are analysed and used to adapt the metadata.

According to an embodiment, the method comprises receiving a request for a computational result, computing a witness for the computational result and providing the witness, the computational result and the digest of the first level accumulator as response to the request.

Such a witness benefits in particular from the fact that the hierarchical accumulator structure allows to flexibly adapt and optimize the respective accumulator in view of an efficient provisioning of witnesses.

According to embodiments the accumulators may be computed in particular to improve/reduce the witness size. More particularly, the plurality of second level accumulators and/or the plurality of third level accumulators may be computed in such a way that an average witness size of witnesses for the accumulator elements of the second level accumulators and/or the plurality of third level accumulators is minimized. This can be achieved according to embodiments by placing accumulator elements which are frequently/often accessed on a higher level of the accumulator, i.e. closer to the digest, than accumulator elements which are less frequently updated.

According to an embodiment of another aspect of the invention, a computing system, e.g. a distributed network, is provided which is configured to perform the method aspects of the invention.

According to an embodiment of another aspect of the invention, a computer program product for operating a computing system is provided. The computer program product comprises a computer readable storage medium having program instructions embodied therewith, the program instructions executable by one or more of a plurality of nodes of the distributed network to cause the one or more of the plurality of nodes to perform steps of the method aspect of the invention.

Features and advantages of one aspect of the invention may be applied to the other aspects of the invention as appropriate.

Other advantageous embodiments are listed in the dependent claims as well as in the description below.

### Brief Description of the Drawings

The invention will be better understood and objects other than those set forth above will become apparent from the following detailed description thereof. Such description makes reference to the annexed drawings, wherein:
FIG. 1 shows a canonical representation of an exemplary hierarchical accumulator structure according to an embodiment of the invention;
FIG. 2 shows an exemplary embodiment of a computation of an accumulator of the hierarchical accumulator structure of FIG. 1;
FIG. 3 shows an exemplary embodiment of an accumulator of a hierarchical accumulator structure representing a queue structure;
FIG. 4 illustrates an exemplary example of a push-operation of the queue structure of FIG. 3;
FIG. 5 illustrates an exemplary example of a pop-operation of the queue structure of FIG. 4;
FIG. 6 shows an exemplary embodiment of another accumulator instantiation of a hierarchical accumulator structure;
FIG. 7 shows a block diagram of a processing system according to an embodiment of the invention;
FIG. 8 shows a flow chart of methods steps of a computer-implemented method according to an embodiment of the invention;
FIG. 9 shows a flow chart of methods steps of a computer-implemented method according to an embodiment of the invention; and
FIG. 10 shows an exemplary embodiment of a computing system according to an embodiment of the invention.

### Modes for Carrying Out the Invention

At first, some general aspects and terms of embodiments of the invention will be introduced.

According to embodiments, a distributed network comprises a plurality of nodes that are arranged in a distributed fashion. In such a distributed network computing, software and data is distributed across the plurality of nodes. The nodes establish computing resources and the distributed network may use in particular distributed computing techniques.

According to embodiments, distributed networks may be embodied as blockchain networks. The term "blockchain" shall include all forms of electronic, computer- based, distributed ledgers. According to some embodiments, the blockchain network may be embodied as proof-of-work blockchain network. According to other embodiments, the blockchain network may be embodied as proof-of-stake blockchain network.

Accumulator: Generally a digest accumulating a plurality of accumulator elements. More particularly any entity, unit, logic or algorithm which combines a set of accumulator elements, in particular a large set of accumulator elements, into a digest or in other words an accumulator value, in particular a short digest/accumulator value, such that there is a witness, that a given accumulator element is indeed a valid element of the accumulator. At the same time it is intractable to come up with a witness for an element not in the accumulator. According to embodiments an accumulator may be a hash of all the accumulator elements. A witness for an accumulator element X in such an embodiment would consist of all accumulator elements except X.

Cryptographic accumulator: A cryptographic accumulator may be defined as an accumulator which is configured to or allows to succinctly represent a set of accumulator elements as a compact digest or in other words as a compact accumulator value. For each accumulator element that is part of the accumulated set of accumulator elements one can obtain a compact witness to attest membership of the accumulator element relative to the compact accumulator value/digest, whereas it is intractable to obtain a valid witness for an element which is not part of the accumulated set of accumulator elements.

According to embodiments cryptographic accumulators may have additional, in particular sophisticated features like the support for non-membership witnesses for elements which are not in the accumulated set, or creating a single compact witness that allows to verify membership of multiple elements relative to the accumulator.

According to embodiments cryptographic accumulators may be viewed as a realization of the concept of accumulators introduced above, which relies on cryptographic hardness assumptions to realize succinctness features of the accumulator value/digest and/or the witnesses.

Hash tree: A hash tree may also be denoted as Merkle-tree and was originally described by Ralph Merkle in Merkle, R. C. (1988). "A Digital Signature Based on a Conventional Encryption Function". Advances in Cryptology - CRYPTO '87. Lecture Notes in Computer Science. 293. pp. 369-378.

A hash tree may be generally described as a tree in which every leaf node is labelled with the cryptographic hash of data elements and every non-leaf node is labelled with the cryptographic hash of the labels of its child nodes. Hash trees may be considered as a generalization of hash lists and hash chains.

According to embodiments hash trees can be used to instantiate cryptographic accumulators, but may also provide additional features like assigning an implicit ordering to the accumulator elements.

A Patricia trie, which may also be denoted as a radix tree, is a data structure that represents a space-optimized trie (prefix tree) in which each node that is the only child is merged with its parent.

A red-black is a self-balancing binary search tree. Each node stores an extra bit representing "color" ("red" or "black"), used to ensure that the tree remains balanced during insertions and deletions.

A balanced tree may also be denoted as self-balancing tree. It may refer to any node-based binary search tree that automatically keeps its height (maximal number of levels below the root) small in the face of arbitrary item insertions and deletions. A red-black tree and a Patricia-trie are instantiations/examples of a balanced tree.

A hash chain may be defined as a binary hash tree where all right children, i.e. children on the right side of any inner nodes, are leaf nodes.

Metadata may be generally defined as data that provides information about the respective accumulator element and its corresponding digest. The metadata comprises in particular accumulator information about the accumulator of the corresponding lower level accumulator of the hierarchical accumulator structure. In other words, it may be any data about the corresponding accumulator. As an example, the first level elements comprise metadata on the corresponding second level accumulator, the second level elements comprise metadata on the corresponding third level accumulator and so forth. The accumulator information may be in particular any data that can be used to compute and store the lower level accumulator in an advantageous way. The accumulator information may directly define an accumulator type for the corresponding lower level accumulators, it may comprise a data type of the data that is stored in the lower level accumulator and/or it may comprise information of write and/or read access patterns of the corresponding lower level accumulator. The metadata may then be used by the underlying processing system/computing system to compute and store the respective accumulator. Metadata may include data structure parameters, i.e. parameters on the structure of the data such as the accumulator type.

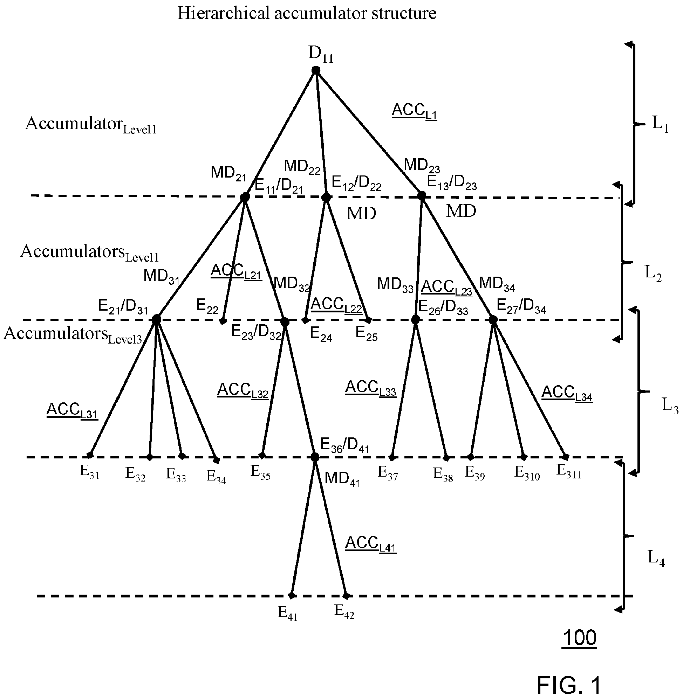

FIG. 1 shows a hierarchical accumulator structure 100 according to an embodiment of the invention which may be used for storing heterogeneous data. The hierarchical accumulator structure 100 may be in particular useful for facilitating an efficient authentication and/or signing of the heterogeneous data, in particular of selected parts of the heterogeneous data. The hierarchical accumulator structure 100 establishes a canonical representation which is universally understandable across representations.

The hierarchical accumulator structure 100 comprises a first level L₁, a second level L₂, a third level L₃ and a fourth level L₄. The first level L₁ comprises a first level accumulator ACC_{L1} and the second level comprises a plurality of second level accumulators, more particularly the second level accumulators ACC_{L21}, ACC_{L22} and ACC_{L23}.

The first level accumulator ACC_{L1} encompasses a plurality of first level elements, namely the first level element E₁₁, E₁₂ and E₁₃, and a first level digest D₁₁ of the plurality of first level elements E₁₁, E₁₂ and E₁₃.

Each of the plurality of second level accumulators ACC_{L21}, ACC_{L22} and ACC_{L23} encompasses a plurality of second level elements. More particularly, the second level accumulator ACC_{L21} comprises the second level elements E₂₁, E₂₂ and E₂₃. The second level accumulator ACC_{L22} comprises the second level elements E₂₄ and E₂₅. The second level accumulator ACC_{L23} comprises the second level elements E₂₆ and E₂₇. Furthermore, each of the plurality of second level accumulators comprises a second level digest of the plurality of second level elements. More particularly, the second level accumulator ACC_{L21} comprises the second level digest D₂₁, the second level accumulator ACC_{L22} comprises the second level digest D₂₂ and the second level accumulator ACC_{L23} comprises the second level digest D₂₃.

Each of the second level digests of the plurality of second level accumulators corresponds to one of the plurality of first level elements. More particularly, the second level digest D₂₁ of the second level accumulator ACC_{L21} corresponds or in other words is equal to the first level element E₁₂. The second level digest D₂₂ of the second level accumulator ACC_{L22} corresponds or in other words is equal to the first level element E₁₁. And the second level digest D₂₃ of the second level accumulator ACC_{L23} corresponds or in other words is equal to the first level element E₁₃.

The third level L3 and the fourth level L4 are arranged in a corresponding manner. More particularly, the third level L3 comprises the third level accumulators ACC_{L31}, ACC_{L32}, ACC_{L33} and ACC_{L34} and the fourth level L4 comprises the fourth level accumulator ACC_{L41}.

The third level accumulator ACC_{L31} comprises the third level elements E₃₁, E₃₂, E₃₃ and E₃₄. The third level accumulator ACC_{L32} comprises the third level elements E₃₅ and E₃₆. The third level accumulator ACC_{L33} comprises the third level elements E₃₇ and E₃₈. And the third level accumulator ACC_{L34} comprises the third level elements E₃₉, E₃₁₀ and E₃₁₁. The third level accumulator ACC_{L31} comprises the third level digest D₃₁, the third level accumulator ACC_{L32} comprises the third level digest D₃₂, the third level accumulator ACC_{L33} comprises the third level digest D₃₃ and the third level accumulator ACC_{L34} comprises the third level digest D₃₄. Each of the third level digests of the plurality of third level accumulators corresponds to one of the plurality of second level elements. As an example, the third level digest D₃₁ of the third level accumulator ACC_{L31} corresponds or in other words is equal to the second level element E₂₁.

Finally, the fourth level accumulator ACC_{L41} comprises the fourth level elements E₄₁ and E₄₂ and the fourth level digest D₄₁. The fourth level digest D₄₁ of the fourth level accumulator ACC_{L41} corresponds or in other words is equal to the third level element E₃₆.

In general, at least a subset of the plurality of first level elements comprise metadata which comprises or defines accumulator information for the corresponding second level accumulator. More particularly, each of the first level elements which correspond to a digest of a second level accumulator comprises such metadata. In other words, each of the first level elements which are not a leaf comprise such metadata. In the exemplary embodiment shown in FIG. 1, each of the first level elements comprise such metadata. The first level element E₁₁ comprises the metadata MD₂₁ which defines or comprises the accumulator information of the corresponding second level accumulator ACC_{L21}. The first level element E₁₂ comprises the metadata MD₂₂ which defines or comprises the accumulator information for the corresponding second level accumulator ACC_{L22} and the first level element E₁₃ comprises the metadata MD₂₃ which defines or comprises the accumulator information of the corresponding second level accumulator ACC_{L23}.

Likewise, a subset of the plurality of second level elements comprise metadata which comprises the accumulator information for the corresponding third level accumulator and a subset of the plurality of third level elements comprise metadata which comprises the accumulator information for the corresponding fourth level accumulator. More particularly, each of the second level elements which correspond to a digest of a third level accumulator comprises such metadata. In the embodiment of FIG. 1, the second level elements E₂₁, E₂₃, E₂₆ and E₂₇ comprises metadata MD₃₁, MD₃₂, MD₃₃ and MD₃₄ respectively for the corresponding third level accumulators.

More particularly, the second level element E₂₁ comprises the metadata MD₃₁ which comprises the accumulator information for the corresponding third level accumulator ACC_{L31}. The second level element E₂₃ comprises the metadata MD₃₂ with the accumulator information for the corresponding third level accumulator ACC_{L32}, the second level element E₂₆ comprises the metadata MD₃₃ which comprises the accumulator information for third level accumulator ACC_{L33} and the second level element E₂₇ comprises the metadata MD₃₄ with the accumulator information for third level accumulator ACC_{L34}. Finally, the third level element E₃₆ comprises the metadata MD₄₁ with the accumulator information for the corresponding fourth level accumulator ACC_{L41}.

The metadata of the hierarchical data structure as shown in FIG. 1 allows to compute the corresponding second level, third level and fourth level accumulators in dependence on the respective accumulator information of the metadata. This allows to adapt the respective instantiation of the corresponding accumulators in dependence on the accumulator information. As a result, the hierarchical accumulator structure may compute different types of the accumulators in dependence on the corresponding metadata. Hence the hierarchical accumulator structure 100 may consist of a heterogeneous structure of a plurality of different types of accumulators, wherein the "interfaces" between these different accumulator types are established by the digests of the lower level accumulators and their corresponding edges of the higher level accumulators. The accumulators may be optimized in dependence on the metadata in many directions. Exemplary embodiments include an optimization in terms of small witness size, efficient updates, inserts and deletes as well as compact storage.

The hierarchical accumulator structure 100 allows to adapt a respective accumulator "on the fly", i.e. during operation, e.g. in dependence on the current data that is to be stored as well as in dependence on an analysis of write and/or read accesses. Such a dynamic adaptation may be a complete change of the accumulator type, e.g. from a red-black tree to a Patricia trie as well as an adaption of the respective instantiation of the respective accumulator type. Furthermore, such an adaptation may be done on an individual level, i.e. an adaption/change of the accumulator may be done only for one or a selected subset of the plurality of accumulators.

According to embodiments, the accumulators of the hierarchical accumulator structure 100, e.g. the first level, second level, third level and/or fourth level accumulators may be embodied as cryptographic accumulators, in particular as hash trees.

According to embodiments the hash tree may represent the data as a balanced tree, a red-black tree, a Patricia trie or a hash chain . The concrete type of tree may be selected such that it makes certain processing operations such as the insertion, the update and the deletion on the underlying data type efficient.

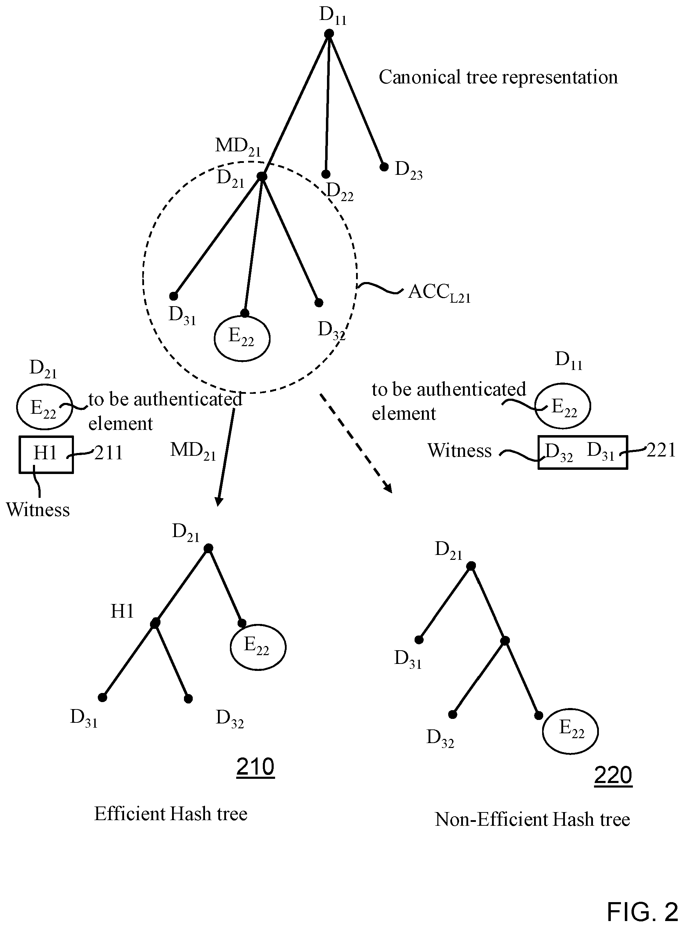

FIG. 2 shows an exemplary embodiment of a computation of an accumulator ACC_{L21} of the hierarchical accumulator structure 100 of FIG. 1.

For this example it is assumed that the metadata MD₂₁ comprises the information that the accumulator element E₂₂ and corresponding witnesses for the accumulator element E₂₂ are more often requested than the other accumulator elements E_{21/}D₃₁ and E₂₃/D₃₂. Accordingly, the processing system stores the accumulator ACC_{L21} in such a way that it facilitates an efficient/improved access to the accumulator element E₂₂, in particular in such a way that the witness size is reduced/minimized. In the embodiment of FIG. 2 it is assumed that the accumulator ACC_{L21} is stored as cryptographic accumulator, in particular as hash tree. As the metadata MD₂₁ specifies that witnesses for the accumulator element E₂₂ are often requested, the hash tree is computed in such a way that efficient witnesses may be computed. This can be achieved by placing the accumulator element E₂₂ on the highest level in the corresponding hash tree. A corresponding hash tree 210 is shown on the left side in FIG. 2. A corresponding witness 211 comprises only the hash H1 of the hash tree 210. Then, assuming that the digest D₂₁ of the hash tree 210 is known in a verifiable way, the accumulator element E₂₂ can be verified.

If on the contrary and in particular without the knowledge of the metadata MD₂₁ a hash tree 220 were computed, a witness would have a bigger size. More particularly, in the hash tree 220 the accumulator element E₂₂ is placed in the lowest level of the hash tree 220. Accordingly, a corresponding witness 221 comprises the digests D₃₂ and D₃₁, having a double witness size compared to the witness 211.

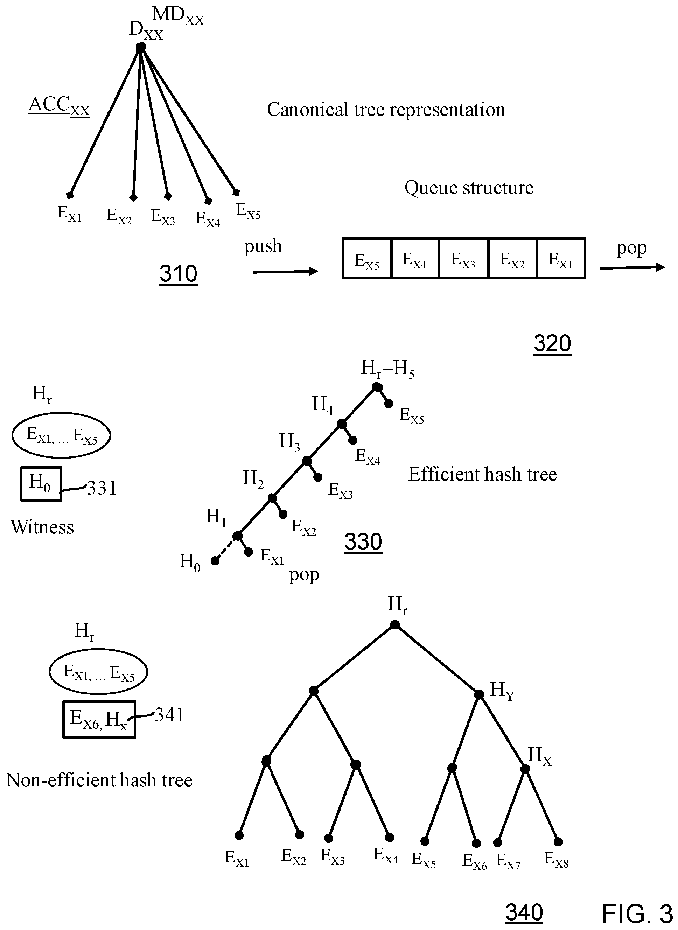

FIG. 3 shows an exemplary embodiment of an accumulator of a hierarchical accumulator structure. More particularly, a canonical representation of an accumulator ACC_{XX}, 310 is shown which represents a corresponding queue structure 320. The accumulator ACC_{XX}, 310 may be generally at any level and at any position of a respective level which is indicated by the subscript XX. The queue structure 320 may have a flexible number of elements which may change during its operation. In the shown example it assumed that the queue structure 320 has 5 elements E_{X1}, E_{X2}, E_{X3}, E_{X4} and E_{X5}. The underlying processing system may push elements into the queue structure 320 by push-operations and it may pull/pop elements out of the queue structure 320 by pull-operations or in other words pop-operations.

For this example it is assumed that the metadata MD_{XX} of the accumulator 310 comprises the information that the accumulator 310 comprises or represents a queue structure as data type and that the accumulator 310 shall be computed as hash chain . FIG. 3 shows a corresponding hash chain 330. The hash chain 330 comprises as leaves the accumulator elements or the hashes of the accumulator elements, wherein consecutive accumulator elements may be added by hashing its value or the hash of its value with the previous hash. In general, a hash chain may be defined as a binary hash tree where all right children/childrens on the right side are leaf nodes.

The hash chain 330 has a constant witness size of 1 for witnesses of the set of accumulator elements of the current queue structure 320. More particularly, if the root hash, i.e. in the shown example the hash Hᵣ=H₅ is known or can be received in a verifiable way, only the hash H₀ is needed as a witness 331 for the accumulator elements E_{X1}, E_{X2}, E_{X3}, E_{X4} and E_{X5}.

On the contrary and in particular without the knowledge of the metadata MD_{XX} a hash tree 340 may have been computed which shows a balanced binary hash tree. Accordingly, a corresponding witness 341 comprises the accumulator element E_{X6} and the hash H_{X}, having a double witness size compared to the witness 331.

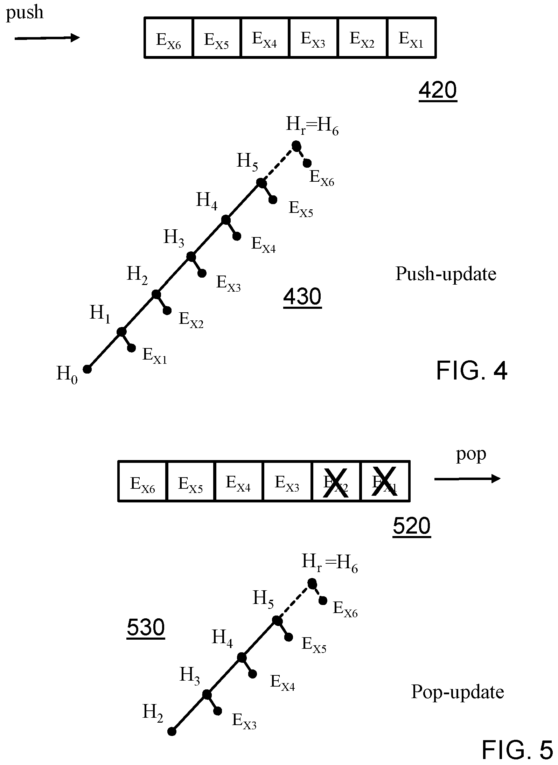

FIG. 4 illustrates an exemplary example of a push-operation of the queue structure 320 of FIG. 3, more particularly an adding of an additional accumulator element E_{X6}, resulting in a queue structure 420, and an update of the corresponding hash chain 430. Such an update can be done in a very efficient way. More particularly, the new accumulator element E_{X6} can just be added by computing a new root hash Hᵣ/H₆. Hence the specific accumulator type which has been computed as specified by the metadata provides not only advantages in terms of small witness sizes, but also in terms of efficient inserts.

FIG. 5 illustrates an exemplary example of a pop-operation of the queue structure 420 of FIG. 4, more particularly a deletion or removal of the accumulator elements E_{X2} and E_{X1}, resulting in a queue structure 520, and an update of the corresponding hash chain 530. Such an update can be done in a very efficient way. More particularly, the removed accumulator elements E_{X2} and E_{X1} can just be removed without any further computation. All that is needed is to keep the hash H₂. Hence the specific accumulator type which has been computed as specified by the metadata provides not only advantages in terms of small witness sizes, but also in terms of efficient deletes.

Compared e.g. with the balanced tree 340 of FIG. 3, this is much more efficient and in particular flexible. Assuming e.g. that for the balanced tree 340 more than 8 elements are needed, a complete recomputing of the hash tree would be needed, while as shown in FIG. 4, the hash chain structure 430 would only need a single hash-computation.

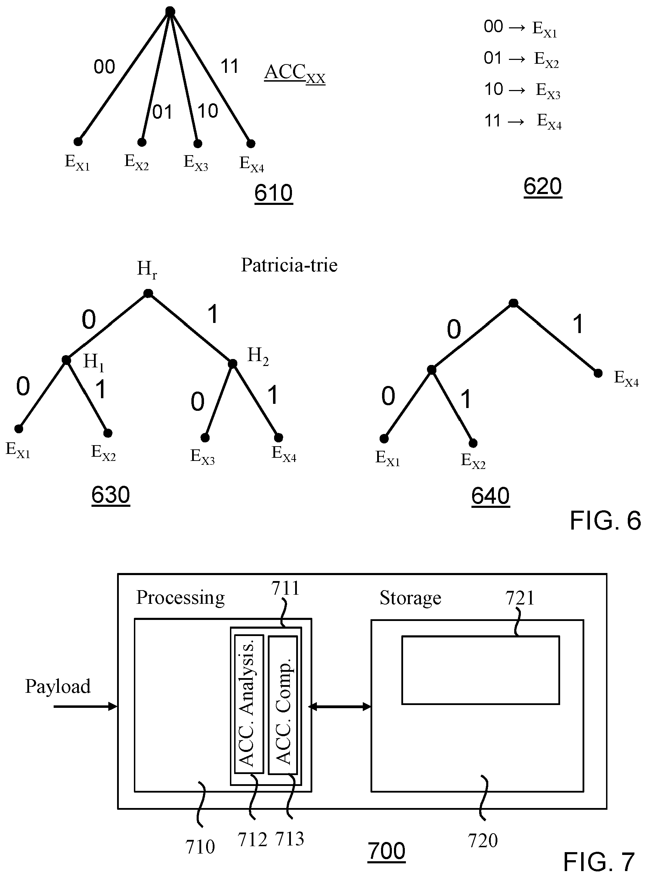

FIG. 6 shows an exemplary embodiment of another accumulator instantiation of a hierarchical accumulator structure. More particularly, a canonical representation of an accumulator ACC_{XX}, 610 is shown which represents a corresponding mapping 620. The accumulator ACC_{XX}, 610 may generally be at any level and at any position of a respective level which is indicated by the subscript XX. The mapping 620 maps as source elements the source pairs 00, 01, 10 and 11 to the accumulator elements E_{X1}, E_{X2}, E_{X3} and E_{X4} respectively as destination elements.

For this example it is assumed that the metadata MD_{XX} of the accumulator 610 comprises as accumulator information the information that the accumulator 610 comprises or represents a mapping as data type. In addition, it may be specified as accumulator information that the accumulator 610 shall be computed/instantiated as Patricia-trie. Such a mapping performs generally a mapping between a set of source elements and a set of destination elements.

FIG. 6 shows a corresponding Patricia-trie 630. The Patricia-trie 630 comprises as leaves the accumulator elements or the hashes of the accumulator elements and as labels of the edges the source elements of the mapping. Accordingly, the Patricia-trie 630 establishes a labelled tree. Such a labelled Patricia-tree facilitates an efficient addition of additional mapping pairs as is illustrated with the Patricia-trie 640. The Patricia-trie 640 comprises only three mappings comprising the source elements 00, 01, 11 and the destination elements E_{X1}, E_{X2} and E_{X4} respectively. In order to add another mapping pair comprising the source element 10 and the destination element E_{X3}, only the root hash Hᵣ and the hash H₁ needs to be updated in order to arrive at the Patricia-tree 630.

FIG. 7 shows a block diagram of a processing system 700 according to an embodiment of the invention. The processing system 700 is adapted to process payloads, in particular a sequence of payloads. The processing system 700 comprises a processing unit 710 and a storage unit 720. The processing unit 710 comprises an accumulator processing unit 711. The accumulator processing unit 711 comprises an accumulator analysis unit 712 and an accumulator computational unit 713. The storage unit 720 comprises an accumulator storage unit 721 for storing data in a hierarchical accumulator structure, as shown e.g. in FIG. 1. The accumulator analysis unit 711 is in particular configured to perform an analysis of data that is stored in the accumulator storage unit 721 and/or that is retrieved from the accumulator storage unit 721.

The accumulator computational unit 711 is in particular configured to perform a computation of the accumulators of the hierarchical accumulator structure in dependence on metadata of the respective accumulators.

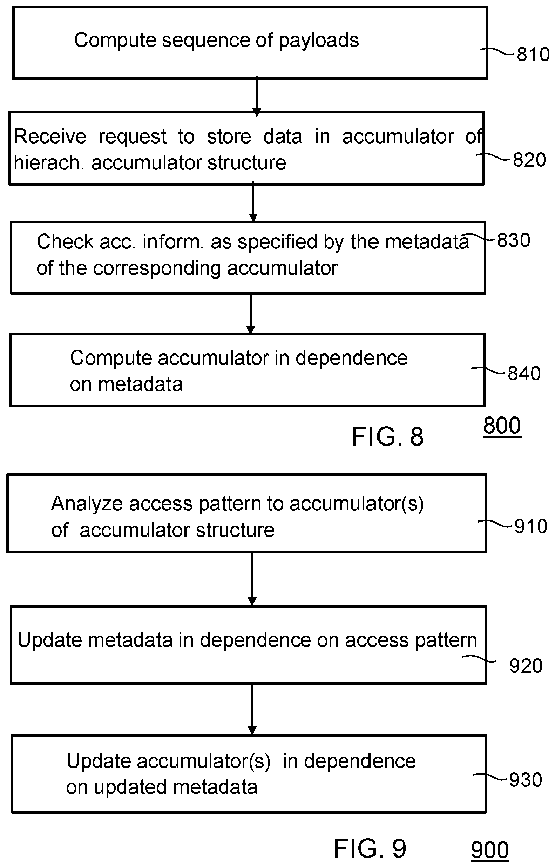

FIG. 8 shows a flow chart 800 of methods steps of a computer-implemented method according to an embodiment of the invention. The method may be performed e.g. by the processing system 700 as shown in FIG. 7.

At steps 810, the processing unit 710 (regularly) computes payloads, in particular a sequence of payloads.

At a step 820, the accumulator processing unit 711 of the processing unit receives a request/message/instruction to store data, in particular a computational result, in the accumulator storage unit 721 of the storage unit 720. The accumulator computational unit 713 checks then, at a step 830, the metadata and the accumulator information as specified by the metadata of the corresponding accumulator of the hierarchical accumulator structure.

Next, at a step 840, the accumulator computational unit 713 computes the respective accumulator in dependence on the metadata and stores it in the accumulator storage unit 721 of the storage unit 720. In addition to the computation of the respective accumulator, the accumulator computational unit 713 also computes any necessary updates of the hierarchical accumulator structure, i.e. in particular updates of other accumulators as required. Furthermore, it stores the updated accumulator/accumulator structure in the accumulator storage unit 721 of the storage unit 720.

The computation and storage of data in the accumulator storage unit 721 may be denoted as write accesses, while reading out data from the accumulator storage unit 721 may be denoted as read access.

FIG. 9 shows a flow chart 900 of methods steps of a computer-implemented method according to an embodiment of the invention. The method may be performed e.g. by the processing system 700 as shown in FIG. 7.

At steps 910, the accumulator analysis unit 712 of the processing unit 710 analyses the computational results and/or write accesses/write access patterns to the accumulator storage unit 721 and/or read accesses/read access patterns from the accumulator storage unit 721. The analysis of the write accesses encompasses e.g. the detection of accumulators as well as accumulator elements which are frequently updated. Likewise, the analysis of the read accesses encompasses e.g. the detection of accumulators as well as accumulator elements which are frequently read and for which e.g. witnesses are frequently requested.

At steps 920, the processing system 700 may update the metadata of the hierarchical accumulator structure in dependence on the analysis of the computational results and/or the write access patterns and/or the read access patterns.

At steps 930, the processing system 700 may update the hierarchical accumulator structure in dependence on the analysis of the computational results and/or the write access patterns and/or the read access patterns and/or the metadata. In particular, the first level accumulator, one or more of the plurality of second level accumulators and one or/more of the plurality of further level accumulators may be updated.

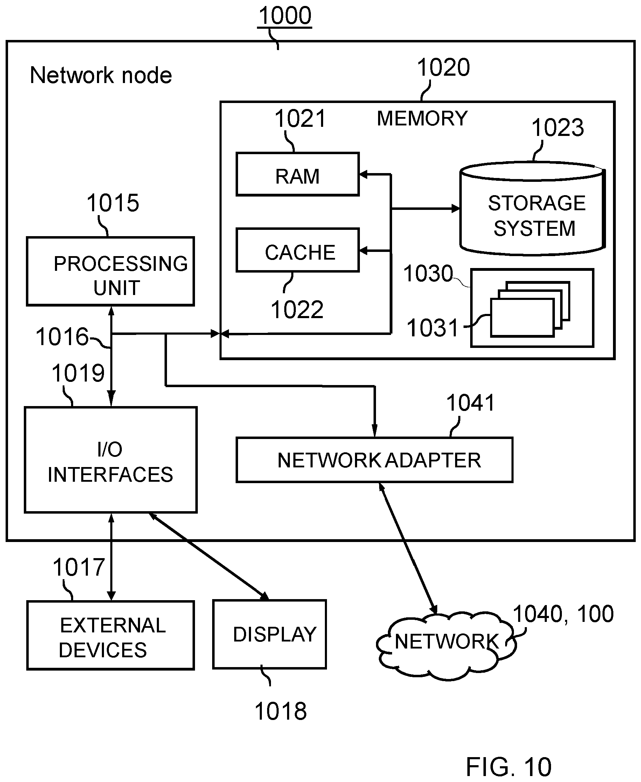

Referring now to Fig. 10, a more detailed block diagram of a computing system 1000 according to embodiments of the invention is shown. The computing system 1000 may be configured to perform a computer-implemented method for storing data in a hierarchical accumulator structure.

The computing system 1000 may be described in the general context of computer system-executable instructions, such as program modules, being executed by a computer system. Generally, program modules may include routines, programs, objects, components, logic, data structures, and so on that perform particular tasks or implement particular abstract data types. The computing system 1000 is shown in the form of a general-purpose computing device. The components of computing system 1000 may include, but are not limited to, one or more processors or processing units 1015, a system memory 1020, and a bus 1016 that couples various system components including system memory 1020 to processor 1015.

Bus 1016 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

Computing system 1000 typically includes a variety of computer system readable media. Such media may be any available media that is accessible by computing system 1000, and it includes both volatile and non-volatile media, removable and non-removable media.

System memory 1020 can include computer system readable media in the form of volatile memory, such as random access memory (RAM) 1021 and/or cache memory 1022. Computing system 1000 may further include other removable/non-removable, volatile/non-volatile computer system storage media. By way of example only, storage system 1023 can be provided for reading from and writing to a non-removable, non-volatile magnetic media (not shown and typically called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to bus 1016 by one or more data media interfaces. As will be further depicted and described below, memory 1020 may include at least one computer program product having a set (e.g., at least one) of program modules that are configured to carry out the functions of embodiments of the invention.

Program/utility 1030, having a set (at least one) of program modules 1031, may be stored in memory 1020 by way of example, and not limitation, as well as an operating system, one or more application programs, other program modules, and program data. Each of the operating system, one or more application programs, other program modules, and program data or some combination thereof, may include an implementation of a networking environment. Program modules 1031 generally carry out the functions and/or methodologies of embodiments of the invention as described herein. Program modules 1031 may carry out in particular one or more steps of a computer-implemented method for providing a user of a distributed network access to computational results computed by the distributed network, e.g. of one or more steps of the methods as described above.

Computing system 1000 may also communicate with one or more external devices 1017 such as a keyboard or a pointing device as well as a display 1018. Such communication can occur via Input/Output (I/O) interfaces 1019. Still yet, computing system 1000 can communicate with one or more networks 40 such as a local area network (LAN), a general wide area network (WAN), and/or a public network (e.g., the Internet) via network adapter 1041. According to embodiments the network 1040 may be in particular a distributed network comprising a plurality of network nodes 10, e.g. the network 100 as shown in FIG. 1. As depicted, network adapter 1041 communicates with the other components of computing system 1000 via bus 1016. It should be understood that although not shown, other hardware and/or software components could be used in conjunction with computing system 1000.

Aspects of the present invention may be embodied as a system, in particular a distributed network comprising a plurality of subnets, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

Aspects of the present invention are described herein with reference to flowchart illustrations and/or block diagrams of methods, networks, apparatus (systems), and computer program products according to embodiments of the invention.

Computer readable program instructions according to embodiments of the invention may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of networks, systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved.

While there are shown and described presently preferred embodiments of the invention, it is to be distinctly understood that the invention is not limited thereto but may be otherwise variously embodied and practiced within the scope of the following claims.

## Claims

1. A computer-implemented method for storing data, the method comprising
storing the data in a hierarchical accumulator structure (100), the hierarchical accumulator structure (100) comprising at least a first level (L1) and a second level (L2), wherein
the first level (L1) comprises a first level accumulator and the second level (L2) comprises a plurality of second level accumulators;
the first level accumulator encompasses a plurality of first level elements and a first level digest of the plurality of first level elements; **characterized in that**
each of the plurality of second level accumulators encompasses a plurality of second level elements and a second level digest of the plurality of second level elements;
each of the second level digests of the plurality of second level accumulators corresponds to one of the plurality of first level elements; and
a subset of the plurality of first level elements comprises metadata, the metadata comprising accumulator information for the corresponding second level accumulator; wherein storing the data comprises
computing the plurality of second level accumulators in dependence on the respective accumulator information of the metadata of the first level elements.

2. A computer-implemented method according to claim 1, wherein storing the data comprises
computing different accumulator types of the second level accumulators in dependence on the respective accumulator information of the metadata of the first level elements.

3. A computer-implemented method according to claim 1 or 2, wherein the hierarchical accumulator structure (100) further comprises a third level (L3) comprising a plurality of third level accumulators; wherein
each of the plurality of third level accumulators encompasses a plurality of third level elements and a third level digest of the plurality of third level elements;
each of the third level digests of the plurality of third level accumulators corresponds to one of the plurality of second level elements; and
a subset of the plurality of second level elements comprises metadata, the metadata comprising accumulator information for the corresponding third level accumulator

4. A computer-implemented method according to any of the preceding claims, wherein the accumulator information of the metadata comprises information of the data type of the corresponding second level and/or third level accumulators.

5. A computer-implemented method according to any of the preceding claims, wherein
the accumulator information defines an accumulator type for the corresponding second level and/or third level accumulators.

6. A computer-implemented method according to any of the preceding claims, wherein
the accumulator information comprises information of write and/or read access patterns of the corresponding accumulator.

7. A computer-implemented method according to claim 2, wherein
the method comprises selecting the respective accumulator type such that one or more predefined operations on the data of the corresponding accumulator can be performed in an efficient manner.

8. A computer-implemented method according to any of the preceding claims, wherein storing the data comprises
computing the first level accumulator and/or one or more of the plurality of second level accumulators and/or one or more of the plurality of third level accumulators as cryptographic accumulators.

9. A computer-implemented method according to any of the preceding claims, wherein storing the data comprises
computing the first level accumulator and/or one or more of the plurality of second level accumulators and/or one or more of the plurality of third level accumulators as hash trees.

10. A computer-implemented method according to any of the preceding claims 8-9, wherein storing the data comprises
computing the plurality of second level accumulators and/or the plurality of third level accumulators in such a way that an average witness size of witnesses for the accumulator elements of the second level accumulators and/or the plurality of third level accumulators is minimized.

11. A computer-implemented method according to any of the preceding claims, wherein
storing the data comprises
regularly analysing write accesses and/or read accesses to the hierarchical accumulator structure (100); and
the method further comprises
adapting the metadata of the plurality of first level elements and/or one or more of the plurality of second level elements and/or one or more of the plurality of third level elements in dependence on the analysis of the write accesses and/or the read accesses

12. A computer-implemented method according to any of the preceding claims, wherein
computing the first level accumulator and/or one or more of the plurality of second level accumulators and/or one or more of the plurality of third level accumulators comprises
regularly computing a sequence of payloads;
regularly storing computational results of the sequence of payloads in the hierarchical accumulator structure (100);
regularly analysing the computational results; and
regularly adapting the metadata of the plurality of first level elements and/or the plurality of second level elements the plurality of third level elements in dependence on the analysis of the computational results.

13. A computer-implemented method according to any of the preceding claims, further comprising
receiving a request for a computational result;
computing a witness (211, 221) for the computational result;
providing the witness (211, 221), the computational result and the digest of the first level accumulator as response to the request.

14. A computing system (1000), the computing system (1000) being configured to
store data in a hierarchical accumulator structure (100), the hierarchical accumulator structure (100) comprising at least a first level (L1) and a second level (L2), wherein
the first level (L1) comprises a first level accumulator and the second level (L2) comprises a plurality of second level accumulators;
the first level accumulator encompasses a plurality of first level elements and a first level digest of the plurality of first level elements;
each of the plurality of second level accumulators encompasses a plurality of second level elements and a second level digest of the plurality of second level elements;
each of the second level digests of the plurality of second level accumulators corresponds to one of the plurality of first level elements; and
a subset of the plurality of first level elements comprises metadata, the metadata comprising accumulator information for the corresponding second level accumulator; wherein the computing system is further configured to store the data by
computing the plurality of second level accumulators in dependence on the respective accumulator information of the metadata of the first level elements.

15. A computer program product, the computer program product comprising a computer readable storage medium having program instructions embodied therewith, the program instructions executable by the computing system (1000) to cause the computing system (1000) to perform a method for storing data, the method comprising
storing the data in a hierarchical accumulator structure (100), the hierarchical accumulator structure (100) comprising at least a first level (L1) and a second level (L2), wherein
the first level (L1) comprises a first level accumulator and the second level (L2) comprises a plurality of second level accumulators;
the first level accumulator encompasses a plurality of first level elements and a first level digest of the plurality of first level elements;
each of the plurality of second level accumulators encompasses a plurality of second level elements and a second level digest of the plurality of second level elements;
each of the second level digests of the plurality of second level accumulators corresponds to one of the plurality of first level elements; and
a subset of the plurality of first level elements comprises metadata, the metadata comprising accumulator information for the corresponding second level accumulator; wherein storing the data comprises
computing the plurality of second level accumulators in dependence on the respective accumulator information of the metadata of the first level elements.

## Patentansprüche

1. Ein computerimplementiertes Verfahren zum Speichern von Daten, wobei das Verfahren umfasst
Speichern der Daten in einer hierarchischen Akkumulatorstruktur (100), wobei die hierarchische Akkumulatorstruktur (100) mindestens eine erste Ebene (L1) und eine zweite Ebene (L2) umfasst, wobei
die erste Ebene (L1) einen Akkumulator der ersten Ebene umfasst und die zweite Ebene (L2) eine Vielzahl von Akkumulatoren der zweiten Ebene umfasst;
der Akkumulator der ersten Ebene eine Vielzahl von Elementen der ersten Ebene und einen Digest der ersten Ebene der Vielzahl von Elementen der ersten Ebene umfasst; **dadurch gekennzeichnet, dass**
jeder der Vielzahl von Akkumulatoren der zweiten Ebene eine Vielzahl von Elementen der zweiten Ebene und einen Digest der zweiten Ebene der Vielzahl von Elementen der zweiten Ebene umfasst;
jeder der Digests der zweiten Ebene der Vielzahl von Akkumulatoren der zweiten Ebene einem der Vielzahl von Elementen der ersten Ebene entspricht; und
eine Teilmenge der Vielzahl von Elementen der ersten Ebene Metadaten umfasst, wobei die Metadaten Akkumulatorinformationen für den entsprechenden Akkumulator der zweiten Ebene umfassen; wobei das Speichern der Daten umfasst
Berechnen der Vielzahl von Akkumulatoren der zweiten Ebene in Abhängigkeit von den jeweiligen Akkumulatorinformationen der Metadaten der Elemente der ersten Ebene.

2. Computerimplementiertes Verfahren nach Anspruch 1, wobei das Speichern der Daten Folgendes umfasst
Berechnen verschiedener Akkumulatortypen der Akkumulatoren der zweiten Ebene in Abhängigkeit von den jeweiligen Akkumulatorinformationen der Metadaten der Elemente der ersten Ebene.

3. Computerimplementiertes Verfahren nach Anspruch 1 oder 2, wobei die hierarchische Akkumulatorstruktur (100) ferner eine dritte Ebene (L3) umfasst, die eine Vielzahl von Akkumulatoren der dritten Ebene umfasst; wobei
jeder der Vielzahl von Akkumulatoren der dritten Ebene eine Vielzahl von Elementen der dritten Ebene und einen Digest der dritten Ebene der Vielzahl von Elementen der dritten Ebene umfasst;
jeder der Digests der dritten Ebene aus der Vielzahl der Akkumulatoren der dritten Ebene einem der Vielzahl der Elemente der zweiten Ebene entspricht; und
eine Teilmenge der Vielzahl von Elementen der zweiten Ebene Metadaten umfasst, wobei die Metadaten Akkumulatorinformationen für den entsprechenden Akkumulator der dritten Ebene umfassen

4. Computerimplementiertes Verfahren nach einem der vorhergehenden Ansprüche, wobei die Akkumulatorinformationen der Metadaten Informationen über den Datentyp der entsprechenden Akkumulatoren der zweiten und/oder dritten Ebene umfassen.

5. Computerimplementiertes Verfahren nach einem der vorhergehenden Ansprüche, wobei
die Akkumulatorinformationen einen Akkumulatortyp für die entsprechenden Akkumulatoren der zweiten und/oder dritten Ebene definieren.

6. Computerimplementiertes Verfahren nach einem der vorhergehenden Ansprüche, wobei
die Akkumulatorinformationen Informationen über Schreib- und/oder Lesezugriffsmuster des entsprechenden Akkumulators umfassen.

7. Computer-implementiertes Verfahren nach Anspruch 2, wobei
das Verfahren das Auswählen des jeweiligen Akkumulatortyps umfasst, so dass eine oder mehrere vordefinierte Operationen an den Daten des entsprechenden Akkumulators auf effiziente Weise durchgeführt werden können.

8. Computerimplementiertes Verfahren nach einem der vorhergehenden Ansprüche, wobei das Speichern der Daten Folgendes umfasst
Berechnen des Akkumulators der ersten Ebene und/oder eines oder mehrerer der mehreren Akkumulatoren der zweiten Ebene und/oder eines oder mehrerer der mehreren Akkumulatoren der dritten Ebene als kryptographische Akkumulatoren.

9. Computerimplementiertes Verfahren nach einem der vorhergehenden Ansprüche, wobei das Speichern der Daten Folgendes umfasst
Berechnen des Akkumulators der ersten Ebene und/oder eines oder mehrerer der mehreren Akkumulatoren der zweiten Ebene und/oder eines oder mehrerer der mehreren Akkumulatoren der dritten Ebene als Hash-Bäume.

10. Computerimplementiertes Verfahren nach einem der vorhergehenden Ansprüche 8-9, wobei das Speichern der Daten Folgendes umfasst
Berechnen der Vielzahl von Akkumulatoren der zweiten Ebene und/oder der Vielzahl von Akkumulatoren der dritten Ebene auf eine solche Weise, dass eine durchschnittliche Witnessgröße für die Akkumulatorelemente der Akkumulatoren der zweiten Ebene und/oder der Vielzahl von Akkumulatoren der dritten Ebene minimiert wird.

11. Computerimplementiertes Verfahren nach einem der vorhergehenden Ansprüche, wobei
das Speichern der Daten umfasst
regelmäßige Analysieren von Schreibzugriffen und/oder Lesezugriffen auf die hierarchische Akkumulatorstruktur (100); und
das Verfahren ferner umfasst
Anpassen der Metadaten der Vielzahl von Elementen der ersten Ebene und/oder eines oder mehrerer der Vielzahl von Elementen der zweiten Ebene und/oder eines oder mehrerer der Vielzahl von Elementen der dritten Ebene in Abhängigkeit von der Analyse der Schreibzugriffe und/oder der Lesezugriffe

12. Computerimplementiertes Verfahren nach einem der vorhergehenden Ansprüche, wobei
das Berechnen des Akkumulators der ersten Ebene und/oder eines oder mehrerer der Vielzahl von Akkumulatoren der zweiten Ebene und/oder eines oder mehrerer der Vielzahl von Akkumulatoren der dritten Ebene umfasst
regelmäßig eine Folge von Nutzdaten zu berechnen;
regelmäßige Speicherung der Berechnungsergebnisse der Nutzdatenfolge in der hierarchischen Akkumulatorstruktur (100);
regelmäßiges Analysieren der Berechnungsergebnisse; und
regelmäßiges Anpassen der Metadaten der Vielzahl von Elementen der ersten Ebene und/oder der Vielzahl von Elementen der zweiten Ebene der Vielzahl von Elementen der dritten Ebene in Abhängigkeit von der Analyse der Berechnungsergebnisse.

13. Computerimplementiertes Verfahren nach einem der vorhergehenden Ansprüche, das ferner Folgendes umfasst
Empfangen einer Anfrage für ein Berechnungsergebnis;
Berechnen einer Witness (211, 221) für das Berechnungsergebnis;
Bereitstellen der Witness (211, 221), des Berechnungsergebnisses und des Digest des Akkumulators der ersten Ebene als Antwort auf die Anfrage.

14. Ein Computersystem (1000), wobei das Computersystem (1000) konfiguriert ist, um
Daten in einer hierarchischen Akkumulatorstruktur (100) zu speichern, wobei die hierarchische Akkumulatorstruktur (100) mindestens eine erste Ebene (L1) und eine zweite Ebene (L2) umfasst, wobei
die erste Ebene (L1) einen Akkumulator der ersten Ebene umfasst und die zweite Ebene (L2) eine Vielzahl von Akkumulatoren der zweiten Ebene umfasst;
der Akkumulator der ersten Ebene eine Vielzahl von Elementen der ersten Ebene und einen Digest der ersten Ebene der Vielzahl von Elementen der ersten Ebene umfasst;
jeder der Vielzahl von Akkumulatoren der zweiten Ebene eine Vielzahl von Elementen der zweiten Ebene und einen Digest der zweiten Ebene der Vielzahl von Elementen der zweiten Ebene umfasst;
jeder der Digests der zweiten Ebene der Vielzahl von Akkumulatoren der zweiten Ebene einem der Vielzahl von Elementen der ersten Ebene entspricht; und
eine Teilmenge der Vielzahl von Elementen der ersten Ebene Metadaten umfasst, wobei die Metadaten Akkumulatorinformationen für den entsprechenden Akkumulator der zweiten Ebene umfassen; wobei das Computersystem ferner konfiguriert ist, um die Daten zu speichern mittels Berechnen der Vielzahl von Akkumulatoren der zweiten Ebene in Abhängigkeit von den jeweiligen Akkumulatorinformationen der Metadaten der Elemente der ersten Ebene.

15. Ein Computerprogrammprodukt, wobei das Computerprogrammprodukt ein computerlesbares Speichermedium mit darin verkörperten Programmanweisungen umfasst, wobei die Programmanweisungen durch das Computersystem (1000) ausführbar sind, um zu bewirken, dass das Computersystem (1000) ein Verfahren zum Speichern von Daten durchführt, wobei das Verfahren umfasst
Speichern der Daten in einer hierarchischen Akkumulatorstruktur (100), wobei die hierarchische Akkumulatorstruktur (100) mindestens eine erste Ebene (L1) und eine zweite Ebene (L2) umfasst, wobei
die erste Ebene (L1) einen Akkumulator der ersten Ebene umfasst und die zweite Ebene (L2) eine Vielzahl von Akkumulatoren der zweiten Ebene umfasst;
der Akkumulator der ersten Ebene eine Vielzahl von Elementen der ersten Ebene und einen Digest der ersten Ebene der Vielzahl von Elementen der ersten Ebene umfasst;
jeder der Vielzahl von Akkumulatoren der zweiten Ebene eine Vielzahl von Elementen der zweiten Ebene und einen Digest der zweiten Ebene der Vielzahl von Elementen der zweiten Ebene umfasst;
jeder der Digests der zweiten Ebene der Vielzahl von Akkumulatoren der zweiten Ebene einem der Vielzahl von Elementen der ersten Ebene entspricht; und
eine Teilmenge der Vielzahl von Elementen der ersten Ebene Metadaten umfasst, wobei die Metadaten Akkumulatorinformationen für den entsprechenden Akkumulator der zweiten Ebene umfassen; wobei das Speichern der Daten umfasst
Berechnen der Vielzahl von Akkumulatoren der zweiten Ebene in Abhängigkeit von den jeweiligen Akkumulatorinformationen der Metadaten der Elemente der ersten Ebene.

## Revendications

1. Un procédé de mise en œuvre par ordinateur pour stocker des données, comprenant
stocker les données dans une structure d'accumulateur hiérarchique (100), la structure d'accumulateur hiérarchique (100) comprenant au moins un premier niveau (L1) et un deuxième niveau (L2), dans lequel
le premier niveau (L1) comprend un accumulateur de premier niveau et le deuxième niveau (L2) comprend une pluralité d'accumulateurs de deuxième niveau ;
l'accumulateur de premier niveau comprend une pluralité d'éléments de premier niveau et un condensé de premier niveau de la pluralité d'éléments de premier niveau ; **caractérisé en ce que**
chacun des accumulateurs de deuxième niveau englobe une pluralité d'éléments de deuxième niveau et un condensé de deuxième niveau de la pluralité d'éléments de deuxième niveau ;
chaque condensé de deuxième niveau de la pluralité d'accumulateurs de deuxième niveau correspond à un de la pluralité des éléments de premier niveau; et
un sous-ensemble de la pluralité d'éléments de premier niveau comprend des métadonnées, les métadonnées comprenant des informations sur l'accumulateur pour le deuxième niveau correspondant ; dans lequel stocker les données comprend
calculer la pluralité d'accumulateurs de deuxième niveau en fonction des informations sur les accumulateurs respectifs des métadonnées des éléments de premier niveau.

2. Un procédé de mise en œuvre par ordinateur selon la revendication 1, dans lequel le stockage des données comprend
calculer de différents types d'accumulateurs de deuxième niveau en fonction des informations respectives sur les accumulateurs contenues dans les métadonnées des éléments de premier niveau.

3. Un procédé de mise en œuvre par ordinateur selon la revendication 1 ou 2, dans lequel la structure hiérarchique d'accumulateurs (100) comprend en outre un troisième niveau (L3) comprenant une pluralité d'accumulateurs de troisième niveau ; dans lequel
chacun de la pluralité d'accumulateurs de troisième niveau englobe une pluralité d'éléments de troisième niveau et un condensé de troisième niveau de la pluralité d'éléments de troisième niveau ;
chaque condensé de troisième niveau de la pluralité d'accumulateurs de troisième niveau correspond à un de la pluralité des éléments de deuxième niveau; et
un sous-ensemble de la pluralité d'éléments de deuxième niveau comprend des métadonnées, les métadonnées comprenant des informations sur l'accumulateur pour l'accumulateur de troisième niveau correspondant.

4. Un procédé de mise en œuvre par ordinateur selon l'une quelconque des revendications précédentes, dans lequel les informations sur l'accumulateur des métadonnées comprennent des informations sur le type de données des accumulateurs de deuxième niveau et/ou de troisième niveau correspondants.

5. Un procédé de mise en œuvre par ordinateur selon l'une quelconque des revendications précédentes, dans lequel
les informations de l'accumulateur définissent un type d'accumulateur pour les accumulateurs de deuxième niveau et/ou de troisième niveau correspondants.

6. Un procédé de mise en œuvre par ordinateur selon l'une quelconque des revendications précédentes, dans lequel
les informations de l'accumulateur comprennent des informations sur les schémas d'accès en écriture et/ou en lecture de l'accumulateur correspondant.

7. Un procédé de mise en œuvre par ordinateur selon la revendication 2, dans lequel
Le procédé comprend sélectionner le type d'accumulateur respectif de manière à ce qu'une ou plusieurs opérations prédéfinies sur les données de l'accumulateur correspondant puissent être effectuées de manière efficace.

8. Un procédé de mise en œuvre par ordinateur selon l'une quelconque des revendications précédentes, dans lequel stocker les données comprend
calculer l'accumulateur de premier niveau et/ou un ou plusieurs accumulateurs de deuxième niveau et/ou un ou plusieurs accumulateurs de troisième niveau en tant qu'accumulateurs cryptographiques.

9. Un procédé de mise en œuvre par ordinateur selon l'une quelconque des revendications précédentes, dans lequel stocker les données comprend
calculer l'accumulateur de premier niveau et/ou un ou plusieurs accumulateurs de deuxième niveau et/ou un ou plusieurs accumulateurs de troisième niveau sous forme d'arbres de hachage.

10. Un procédé de mise en œuvre par ordinateur selon l'une quelconque des revendications 8 à 9 précédentes, dans lequel stocker les données comprend
calculer la pluralité d'accumulateurs de deuxième niveau et/ou la pluralité d'accumulateurs de troisième niveau de manière à minimiser une taille moyenne des témoins pour les éléments d'accumulateur des accumulateurs de deuxième niveau et/ou la pluralité d'accumulateurs de troisième niveau.

11. Un procédé de mise en œuvre par ordinateur selon l'une quelconque des revendications précédentes, dans lequel
stocker les données comprend
analyser régulièrement des accès en écriture et/ou des accès en lecture à la structure hiérarchique d'accumulateurs (100) ; et
le procédé comprend en outre
adapter les métadonnées de la pluralité d'éléments de premier niveau et/ou d'un ou plusieurs éléments de deuxième niveau et/ou d'un ou plusieurs éléments de troisième niveau en fonction de l'analyse des accès en écriture et/ou des accès en lecture.

12. Un procédé de mise en œuvre par ordinateur selon l'une quelconque des revendications précédentes, dans lequel
calculer l'accumulateur de premier niveau et/ou un ou de plusieurs accumulateurs de deuxième niveau et/ou un ou de plusieurs accumulateurs de troisième niveau comprend
calculer régulièrement une séquence de charges utiles
stocker régulièrement des résultats de calcul de la séquence de charges utiles dans la structure d'accumulateur hiérarchique (100) ;
analyser régulièrement les résultats de calcul ; et
adapter régulièrement les métadonnées de la pluralité d'éléments de premier niveau et/ou de la pluralité d'éléments de deuxième niveau et de la pluralité d'éléments de troisième niveau en fonction de l'analyse des résultats de calcul.

13. Un procédé de mise en œuvre par ordinateur selon l'une des revendications précédentes, comprenant en outre
recevoir une demande d'un résultat de calcul ; calculer un témoin (211, 221) pour le résultat de calcul ;
fournir le témoin (211, 221), le résultat de calcul et le condensé de l'accumulateur de premier niveau en réponse à la demande.

14. Un système informatique (1000), le système informatique (1000) étant configuré pour
stocker des données dans une structure d'accumulateur hiérarchique (100), la structure d'accumulateur hiérarchique (100) comprenant au moins un premier niveau (L1) et un deuxième niveau (L2), dans lequel
le premier niveau (L1) comprend un accumulateur de premier niveau et le deuxième niveau (L2) comprend une pluralité d'accumulateurs de deuxième niveau ;
l'accumulateur de premier niveau comprend une pluralité d'éléments de premier niveau et un condensé de premier niveau de la pluralité d'éléments de premier niveau ;
chacun des accumulateurs de deuxième niveau englobe une pluralité d'éléments de deuxième niveau et un condensé de deuxième niveau de la pluralité d'éléments de deuxième niveau ;
chaque condensé de deuxième niveau de la pluralité d'accumulateurs de deuxième niveau correspond à l'un des éléments de premier niveau de la pluralité ; et
un sous-ensemble de la pluralité d'éléments de premier niveau comprend des métadonnées, les métadonnées comprenant des informations sur l'accumulateur de deuxième niveau correspondant ; dans lequel le système informatique est en outre configuré pour stocker les données en
calculant la pluralité d'accumulateurs de deuxième niveau en fonction des informations d'accumulateur respectives des métadonnées des éléments de premier niveau.

15. Un produit de programme d'ordinateur, le produit de programme d'ordinateur comprenant un support de stockage lisible par ordinateur ayant des instructions de programme incorporées, les instructions de programme exécutables par le système informatique (1000) pour amener le système informatique (1000) à exécuter un procédé de stockage de données, le procédé comprenant
stocker les données dans une structure d'accumulateur hiérarchique (100), la structure d'accumulateur hiérarchique (100) comprenant au moins un premier niveau (L1) et un deuxième niveau (L2), dans lequel
le premier niveau (L1) comprend un accumulateur de premier niveau et le deuxième niveau (L2) comprend une pluralité d'accumulateurs de deuxième niveau ;
l'accumulateur de premier niveau comprend une pluralité d'éléments de premier niveau et un condensé de premier niveau de la pluralité d'éléments de premier niveau ;
chacun des accumulateurs de deuxième niveau englobe une pluralité d'éléments de deuxième niveau et un condensé de deuxième niveau de la pluralité d'éléments de deuxième niveau ;
chaque condensé de deuxième niveau de la pluralité d'accumulateurs de deuxième niveau correspond à l'un des éléments de premier niveau de la pluralité ; et
un sous-ensemble de la pluralité d'éléments de premier niveau comprend des métadonnées, les métadonnées comprenant des informations sur l'accumulateur de deuxième niveau correspondant ; dans lequel stocker les données comprend
calculer la pluralité d'accumulateurs de deuxième niveau en fonction des informations sur les accumulateurs respectifs des métadonnées des éléments de premier niveau.
